# EUROPEAN PATENT SPECIFICATION

(11) **EP 3 064 478 B1**
(45) Date of publication and mention of the grant of the patent: **01.05.2019**
(21) Application number: 16158580.7
(22) Date of filing: 03.03.2016
(51) Int. Cl.: C03B 33/03, C03B 33/033, C03B 33/04, C03B 33/07

(54) **METHOD AND MACHINE FOR CUTTING A GLASS SHEET**
VERFAHREN UND MASCHINE ZUM SCHNEIDEN VON GLASPLATTEN
PROCÉDÉ ET MACHINE PERMETTANT DE DÉCOUPER DES FEUILLES DE VERRE

(30) Priority: 03.03.2015 IT TO20150146
(43) Date of publication of application: 07.09.2016
(73) Proprietor: Bottero S.p.A., 12100 Cuneo (IT)
(72) Inventor: MARGARIA, Bruno, 12020 Villar San Costanzo (IT); MASOERO, Alberto, 12100 Cuneo (IT); COMETTO, Paolo, 12100 Cuneo (IT)
(74) Representative: Bergadano, Mirko

(56) References cited:
- EP-A1- 1 566 365
- EP-A1- 2 316 797
- EP-A1- 2 583 951
- ES-A1- 2 265 244

## Description

The present invention relates to a method and to a machine for cutting a glass sheet.

In particular, the present invention relates to a method and to a machine for cutting laminated glass sheets, to which the following disclosure specifically refers but without any loss of generality.

To cut a sheet of laminated glass according to a predefined cutting programme comprising a plurality of cutting lines delimiting products having identical or different shapes and geometries, the use is known of a cutting machine of the type comprising a supporting surface of the sheet to be cut, at least one scoring tool movable in opposite senses along a fixed rectilinear scoring path to obtain, in sequence, scoring lines on the sheet, such scoring lines coinciding with the required cutting lines.

The machine further comprises a unit for handling the sheet on the supporting surface to move the sheet, in use, in opposite senses in a longitudinal direction orthogonal to said scoring path and a rotating unit to rotate the sheet about an axis orthogonal to said supporting surface.

In the prior art machines described above, each time the cutting programme envisages a cutting line orthogonal or at an angle to the scoring path, the sheet is first rotated by an angle so as to bring the cutting line parallel to the scoring path, and then the sheet is moved towards the scoring path until the cutting line is made to coincide with said scoring path. At this point, the sheet is scored and then severed, in a way known in the prior art.

With the cutting method described above, though widely used, it is not possible to increase the machine's production rate, i.e. to reduce cutting times while also maintaining the same geometric and/or dimensional quality of the products obtained.

The above is due to the fact that each cutting line is arranged in correspondence with the scoring path, which means the sheet must always be translated longitudinally towards the fixed scoring path. In other words, in the case of cuts along lines that are not parallel to the scoring path and, specifically, in the case of diagonal cuts, the sheet always has to be repositioned before scoring and thus severing the sheet.

During tests it has been found that, in the majority of cases, increasing the speed of rotation or the speed of translation to reposition the sheet results in a proportional increase in positioning errors and a subsequent reduction in the quality of the finished product. In other words, increasing the speed at which the sheet is repositioned often results in the loss of at least some of the initial references of the sheet which must be recovered during the cutting step.

EP2583951A1 corresponds to the preamble of claim 1 and discloses a machine where the glass sheet is hinged by a suction cup or by two opposed suction cups.

The purpose of the present invention is to provide a machine for cutting monolithic or laminated glass sheets, which overcomes the problems described above in a simple and economical manner and which, in particular, allows sheet cutting times to be reduced and, at the same time, makes it possible to guarantee the production of finished products having the geometric and dimensional properties envisaged by the cutting programme.

According to the present invention there is provided a machine for cutting a glass sheet along a predefined cutting line, as defined in claim 1.

The present invention also relates to a method for cutting glass sheets.

According to the present invention there is provided a method for cutting a glass sheet along at least one predefined cutting line as defined in claim 7.

The invention will now be described with reference to the accompanying drawings, illustrating a non-limiting embodiment thereof, in which:
figure 1 is a schematic plan and substantially block diagram view of a preferred embodiment of a machine for cutting a laminated glass sheet, produced according to the teachings of the present invention;
figures 2, 3, and 4 are cross-sections on an enlarged scale, respectively, along the lines II-II, III-III and IV-IV of figure 1; and
figure 5 is a schematic and substantially block diagram view of some steps of a preferred sheet cutting method according to the teaching of the present invention.

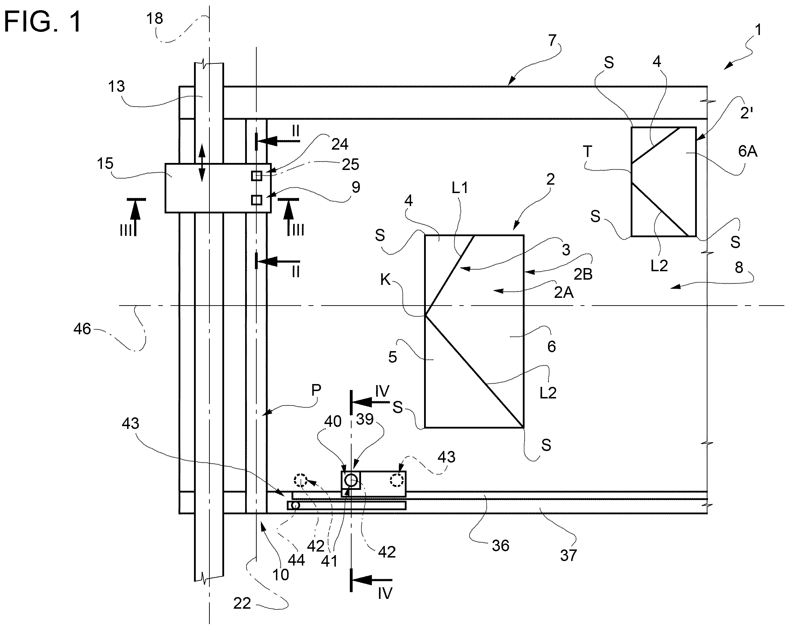

In figure 1, denoted as a whole by reference numeral 1 is a machine for cutting laminated glass sheets 2, 2' according to a predefined cutting programme 3 (figure 1 shows two sheets to be cut according to two different cutting programs 3) comprising, in the example described, two cutting lines denoted by L1 and L2 in order to obtain, again in the example described, three products denoted by reference numerals 4, 5 and 6 having desired geometries and dimensions. Here and in the description that follows, the term "product" is used to refer to a finished part or to a part that must undergo further processing, or to edge trimmings or to portions of sheet to be recovered, for example, for subsequent use. Clearly, according to the set cutting programme, the product may be obtained by cutting the sheets 2,2' along just one of the two lines L1 and L2 that are shown or along one or more cutting lines other than those shown.

The machine 1 comprises a table 7 defining a supporting surface 8, supporting the sheet 2, and a scoring unit 9 arranged in a scoring station 10 to obtain cutting lines on the sheet 2, each coinciding with a respective line L1 and L2.

The machine 1 also comprises a severing unit 11, of a type known in the prior art and not described in detail here, to sever the sheet 2 along the lines L1 and L2 and separate the products 4-6 from one another.

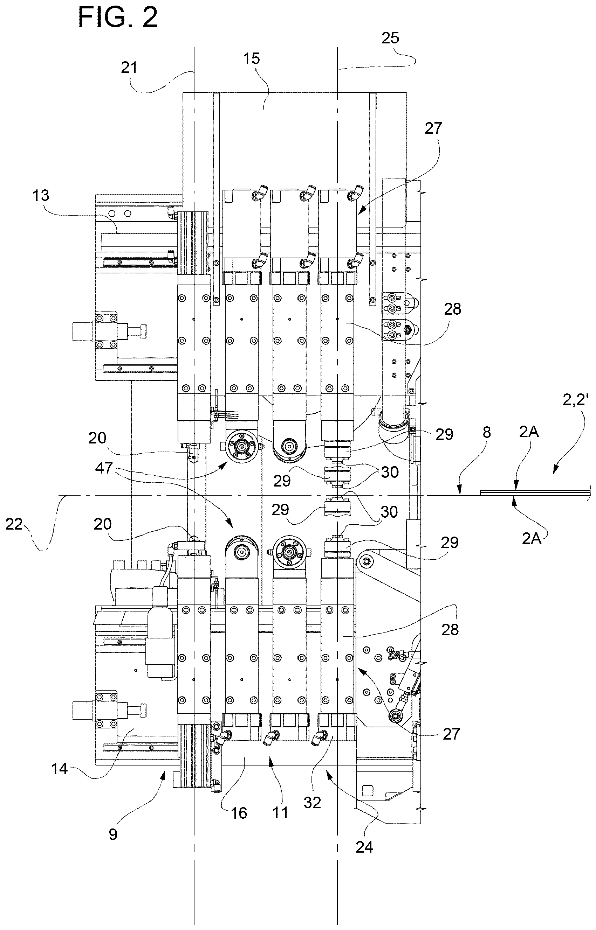

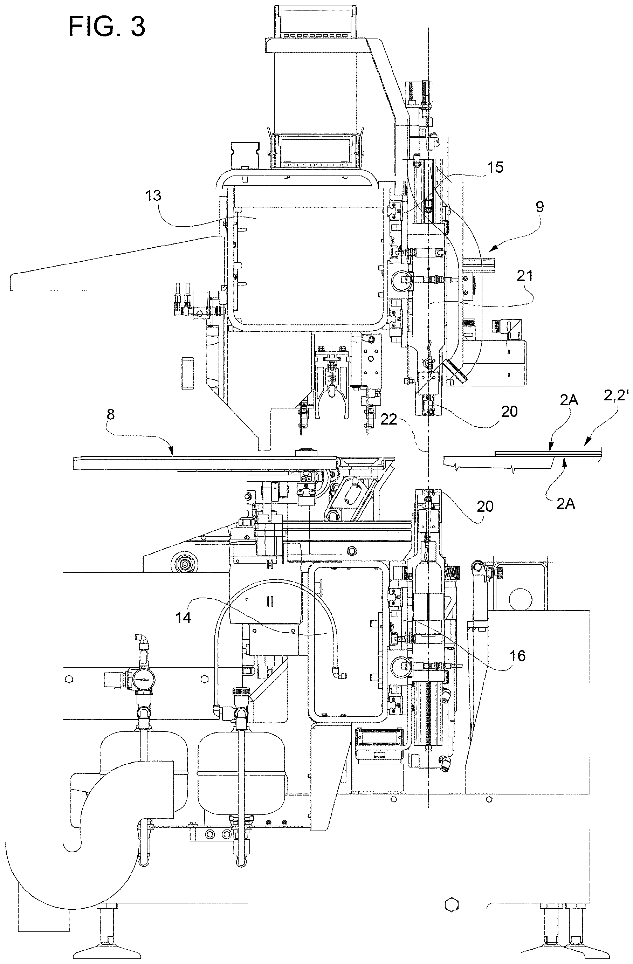

In the specific example described here, the scoring unit 9 comprises two guiding bridges 13 and 14, of a type known in the prior art, arranged facing one another and on opposite sides of the supporting surface 8, as shown in figures 2 and 3. The scoring unit 9 further comprises two motorised carriages 15 and 16 coupled to the bridge 13 and, respectively, to the bridge 14 so as to be able to slide along a direction 18 (fig. 1) and for each carriage 14,15 a respective sheet scoring tool 20, of a kind known in the prior art and not described in detail here, facing towards the other scoring tool and both movable in opposite senses along a common axis 21 orthogonal to the supporting surface 8. In use, the carriages 15 and 16 move the respective scoring tools 20 in opposite senses along a fixed rectilinear sheet scoring path 22 parallel to the direction 18 intersecting the axis 21.

Again with reference to figure 1, the machine 1 further comprises a sheet hinging and retaining unit 24 borne by the carriages 15 and 16 and suitable, in use, to permit the coupling of the sheet 2 to said carriages 15 and 16 rotatably about a movable hinge axis 25, orthogonal to the supporting surface 8, parallel to the axis 21 and intersecting the scoring path 22 (figures 1-3). The axes 21 and 25 and the scoring path 22 thus all lie on a same plane orthogonal to the surface 8 and the outline of which is denoted by P in figure 1.

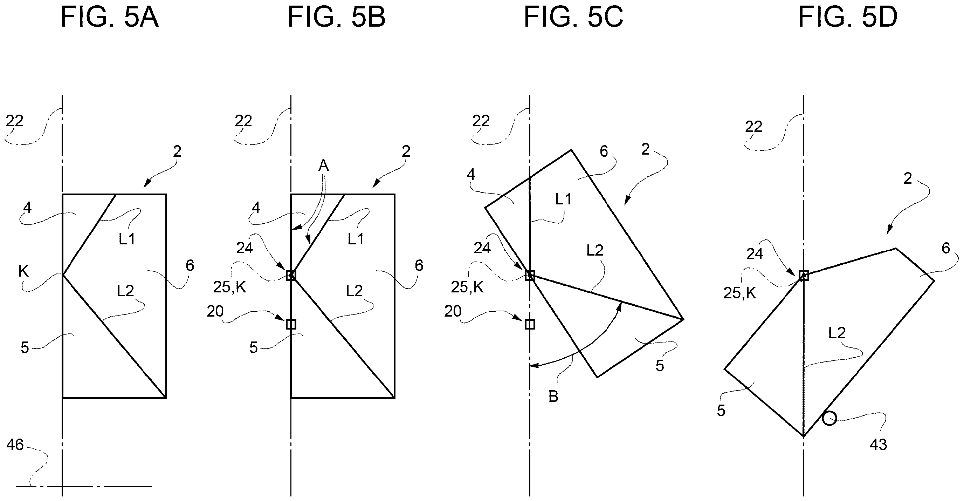

In detail, the hinging unit 24 comprises, for each carriage 15,16, a respective sheet coupling and hinging device 27. Each device 27 comprises, in turn, a respective frame or body 28 integrally connected to the respective carriage 15,16, a sheet attachment head 29 arranged coaxial to the axis 25 in a position facing towards the attachment head of the other device 27 and coupled to the respective frame 28 so as to rotate idly about said axis 25. Conveniently, each head 29 is a solid head, that is to say, with no passages for operating fluids under vacuum, and comprises a respective solid free end portion 30, which extends coaxial to the axis 25 in a position facing towards the portion 30 of the other head 29. The portion 30 is conveniently a solid disc made, preferably, of an elastomeric material and suitable to cooperate, in use, directly abutting against a respective wide surface 2A of said sheet 2. Conveniently, each end portion 30 or at least the portion 30 associated with the bridge 15 has a maximum outside diameter of approximately 20 mm. Said dimension allows the sheet 2,2' to be clamped and held and makes it possible to act in a perimeter area of approximately 10 millimetres of said sheet 2,2', which is the area that is generally left free of the coating known as Low-E in the case of externally coated sheets and which is removed at the start or at the end of processing of said sheet. In this way, the sheet can be held without damaging the coating arranged inside a ten millimetre wide perimeter corridor, on the one hand, and without generating high flexural torque on the head 29 and thus on the sheet as a result of pushing. The absence of flexural torque on the head 29 and on the sheet and of pressure peaks between the sheet and the portion 30 is a consequence of the fact that the reduced dimensions of the portion 30 mean the hinge axis 25 can be arranged in a position tangent to a perimeter edge of the sheet or intersecting said sheet without interfering with the internal coating mentioned previously so that a thrust load is practically always applied on the sheet and never on the outside of said sheet. In that respect, see figures 5A, 5D.

Each head 29 is borne by a rod movable in opposite senses along the axis 25 under the thrust of a respective actuator 32, conveniently a pneumatic actuator, between a distanced resting position, illustrated in figure 2 by the unbroken line, and an advanced position, illustrated by the dashed line, again in figure 2, in which the portions 30 clamp the sheet 2 between them. In this way, on each carriage 15,16 the scoring tool 20 and the respective portion 30 cooperating with the sheet are mutually aligned along the scoring path 22, as illustrated in figure 1.

Again with reference to figure 1, the machine 1 further comprises a motorised side carriage 35, which is, conveniently, coupled to a rectilinear guide 36 orthogonal to the scoring path 22 and parallel to the supporting surface 8. Preferably, the guide extends in a position adjacent to a longitudinal side 37 of the table 7. The side carriage 35 is movable along the guide 36 in opposite senses and supports a handling unit 39 for rotating the sheet 2 about the hinge axis 25.

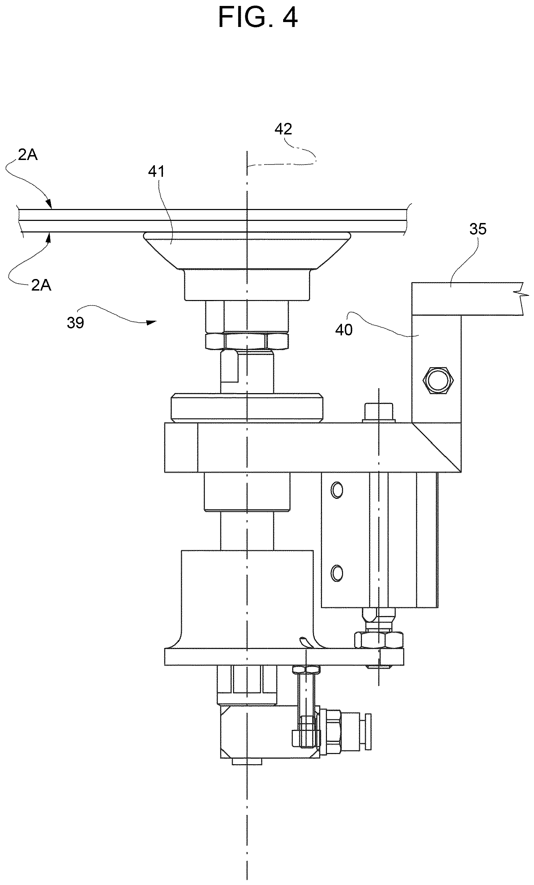

With reference to figure 4, the unit 39 comprises a frame or body 40 integrally connected to the carriage 35 and a suction cap 41 suitable to couple with the wide surface 2A of the sheet 2 arranged in contact with the surface 8. The suction cap 41 is coupled to the frame 40 to rotate idly about a hinge axis 42 orthogonal to the supporting surface 8 and intersecting said supporting surface 8 and, in use, the sheet 2 to be translated in opposite senses along said axis 42 between a lowered resting position and a raised gripping position of the sheet 2, illustrated in figure 4. The carriage 35 moves the suction cap 41 away from and towards an advanced end-of-travel position, illustrated by the dashed line in figure 1, in which the suction cap 41 is at a distance from the scoring path 22.

Again with reference to figure 1, the carriage 35 also bears a sheet handling support, coupled thereto, conveniently defined by a stop pin 43. The pin 43 is preferably coupled to the carriage 35 so as to rotate idly about a hinge axis 44 parallel to the axis 42. With reference to figure 1, the pin 43 is in an advanced position with respect to the suction cap 41 towards the scoring path 22. According to an alternative embodiment, the pin 43 is coupled to the carriage by means of a guide and slide assembly so as to translate on the surface 8 with respect to the suction cap 41 orthogonally to the line 22. According to a further embodiment, the pin 43 (illustrated by the dashed line in figure 1) is arranged on the opposite side of said axis 42 with respect to the scoring path 22. In this way, the suction cap 41 is always between the pin 43 and the scoring path 22. Furthermore, the pin 43 is coupled to the carriage 35 so as to move along the axis 44 between a retracted resting position and an advanced operating position, in which it extends beyond the supporting surface 8 to cooperate in abutment with a perimeter surface 2B (figure 1) of the sheet 2 extending orthogonally to said supporting surface 8.

According to a first alternative embodiment that is not illustrated, the carriage 35 bears either the suction cap 41 or the pin 43. In that case, the suction cap 41 or the pin 43 are borne by another handling member, for example another carriage or a bridge, for example a sheet abutment bridge, movable in directions orthogonal to the path 22 and parallel to the supporting surface 8. According to an alternative embodiment that is not illustrated, the pin 43 is locked in an angularly fixed position.

The products 4,5,6 are produced using the machine 1 by means of the method that will now be described. With the sheet 2 arranged as shown in figure 5A, the sheet 2 is first translated parallel to itself towards the scoring bridges 15 and 16 along a direction 46 parallel to the guide 36, for example by means of motorised belts or suction caps normally mounted onboard the table 7, until a point of the cutting line L1, for example the point K, is on the scoring path 22. At this point, keeping the scoring tools 20 in position at a distance from the sheet 2, the carriages 15 and 16 are moved in the direction 18 until the hinge axis 25 is made to intersect the point K (fig. 5B), in the specific case the starting point of both cutting lines L1 and L2, after which the actuators 32 are operated and the sheet 2 is clamped at the point K between the portions 30 of the heads 29.

At this point, when the angle A between the scoring path 22 and the cutting line L1 has been determined and when the position of the axis 25 along the scoring path 22 and the position of the suction cap 41 along the guide 36 are known, the carriages 15 and 16 are translated towards the side 37 of the table 7 and the carriage 35, at the same time, and in a geometrically synchronised manner, is moved away from the scoring path 22 so that the sheet 2 is rotated until the cutting line L1 is made to coincide exactly with the scoring path 22 (Figure 5C). Next, the sheet 2 is blocked on the supporting surface 8, in a known manner, and the heads 29 retracted before advancing the scoring tools 20, which are now already in position, towards the sheet 2 and moving them along the scoring path 22 while the sheet 2 is scored along the cutting line L1.

When scoring is completed, the sheet 2 is severed, for example by means of cutting wheels 47 (figure 1) borne by the carriages 15,16 and the product 4 is removed.

When severing is completed, the carriages 15,16 are moved back and the part of the sheet 2 that remains is clamped again in exactly the same point K as before by means of the heads 29 (figure 5D).

At this point, the part of the sheet 2 that remains is released from the connection to the supporting surface 8 and coupled to the suction cap 41 and, when the angle B between the line L2 and the scoring path 22 has been calculated, the part of the sheet 2 that remains is first straightened by rotating it in the opposite sense to before by means of the suction cap 41. Once it has reached a straightened position in which it is possible to continue the rotation with the pin 43, the suction cap 41 is uncoupled from the sheet 2 and said sheet 2 is pushed by the pin 43 towards the path 22 and at the same time pulled by the carriages 15,16 so as to be rotated further in the opposite sense to before about the axis 25 until the cutting line L2 coincides exactly with the scoring path 22 (figure 5D). When the scoring path 22 has been reached, the remaining part of the sheet 2 is scored and then severed along the line L2 following the steps described above and the products 5 and 6 are separated from one another and removed from the table 7.

When the cutting lines L1 and L2 do not intersect at K, as in the case of the sheet 2' (fig. 1), but are separated by a section T, for example rectilinear, after severing along the line L1, the carriages 15 and 16 are moved in such a way that the hinge axis 25 intersects the line L2 before releasing the remaining part of the sheet 2' and rotating it about said hinge axis 25 as previously described.

Depending on the dimensions of the sheet 2,2' and/or on the angle/position of the cutting lines L1 and L2 with respect to the corners S of the sheet 2,2', said sheet 2,2' can be rotated in the opposite sense to before using the suction cap 41 instead of the pin 43. During tests it has been found preferable and convenient to always use the suction cap 41 when this can be coupled to the sheet 2,2', to rotate the sheet 2,2' by the desired angle and, in general, when the sheet 2,2' must be rotated by an angle equal to or of around 90° and the cutting lines L1 and L2 do not extend from the corners S, whereas it is convenient to use the pin 43 as the pushing element when the lines L1 and L2, in particular the line L2, start from one of the corners S, in particular from the corner S furthest from the path of the line 22 and adjacent to the side 37, or from points close to said corners S.

From the above it is clear that with the machine 1 and the method for cutting sheets described herein, cutting times can be reduced, in that as soon as the sheet 2 has been rotated a cutting line L1,L2 already coincides with the scoring path 22 and, thus, compared to the known methods, all longitudinal translations of the sheet 2 towards the scoring station 10 after rotating the sheet are eliminated.

Moreover, when several consecutive cuts need to be performed on the sheet, the sheet 2,2' does not have to be repositioned in that during the rotation it is always stably connected to the carriages 15 and 16, during scoring and severing it is held by the suction elements on the table 7 and immediately after severing it is clamped again by the heads 29 and moved by means of the suction cap 41 or by means of the pin 43, thus without ever losing the initial references. Moreover, said movements of the sheets to be rotated are always performed in the presence of an air space operated on the supporting surface 8, which can be controlled in order to guarantee reduced friction and thus facilitate such handling.

The maintenance of the initial references is also guaranteed by the fact that since the heads 29 and the suction cap 41 are idle, they never transfer a concentrated handling torque to the sheet 2,2' but only pulling or pushing forces so that constant relative positioning is guaranteed, even with large size sheets 2,2'. Also in that case, the pulling or pushing forces are always low owing to the presence of said air space. Generally speaking, the maintenance of the initial references is always guaranteed by the fact that during the various steps the sheet is always kept under control by means of the clamping and handling means and by the fact that these only release their grip after other suction fastening means have been activated.

In other words, the references are maintained regardless of the dimensions of the sheet to be handled.

From the above it is also clear that the cutting method described herein can be used not only to sever laminated glass sheets but also to cut monolithic glass sheets. In the latter case, the method is implemented by a machine which only comprises the bridge 13 and the carriage 15, on which are assembled, in the same respective positions described above, the scoring tool 20 and a gripping and retaining device which only differs from the device 24 already described in that the respective gripping head 29 is, for example, of the suction cap type or of the clamp type i.e. with opposite pressure members, and in any case capable of holding and hinging the sheet 2 to the carriage 15 in an idle manner about the hinge axis 25 on its own.

## Claims

1. Machine for cutting a glass sheet along a predefined cutting line; the machine comprising:
• a supporting surface (8), for supporting the sheet,
• at least one motorised scoring tool (20) movable along a rectilinear scoring path (22),
• at least one clamp device for gripping and retaining said sheet, the clamp device having coupling members (29) for coupling to said sheet, and the coupling members (29) being rotatable about a hinge axis (25) orthogonal to said supporting surface (8),
• at least one sheet handling member and
• operating means for moving said sheet handling member in opposite senses along a rectilinear direction (46) orthogonal to said scoring path (22),
said coupling members (29) and said handling member being idle about respective hinge axes, and said scoring tool (20) and said coupling members (29) being mutually aligned along said scoring path (22), and said hinge axis (25) intersecting said scoring path (22); actuator means being provided to move said coupling members (29) in opposite senses along said scoring path (22),
said coupling members (29) comprising a pair of thrust rods which are coaxial along said hinge axis (25); actuator means (32) being provided to move said thrust rods along said hinge axis (25) away from and towards an advanced position; **characterized in that** said thrust rods have respective solid free end portions (30), which face each other along said hinge axis (25) and, in the advanced position, rest directly on said sheet and clamp the sheet between them; at least one of said solid free end portions (30) having a maximum outside diameter of twenty millimetres.

2. Machine according to claim 1, **characterised by** comprising at least one scoring bridge (13,14) and one motorised carriage (15,16) movable along said scoring bridge (13,14) in opposite senses along said scoring path (22); said carriage (15,16) carrying said scoring tool (20) and said clamp device.

3. Machine according to claim 2, **characterised by** comprising two of said scoring bridges and two of said carriages, each carrying a respective said scoring tool (20) and a respective said thrust rod.

4. Machine according to any one of the preceding claims, **characterised in that** said sheet handling member is rotatable idle about a hinge axis, orthogonal to said supporting surface (8) and, in use, intersecting said sheet.

5. Machine according to any one of the preceding claims, **characterised in that** said sheet handling member comprises a suction element or a thrust pin projecting, in use, beyond the supporting surface (8) towards the sheet and arranged adjacent to a longitudinal side of said supporting surface (8) parallel to said rectilinear direction (46).

6. Machine according to any one of the preceding claims, **characterised by** comprising handling means for moving said handling member along a direction orthogonal to said supporting surface (8) away from and towards an advanced position of cooperation with said sheet.

7. Method for cutting a glass sheet along at least one predefined cutting line by using a cutting machine as claimed in claim 1; the method comprising the steps of:
• arranging a sheet to be cut on said supporting surface (8),
• moving the sheet on said supporting surface (8),
• bringing said predefined cutting line to intersect said scoring path (22) in at least one point of intersection (K),
• bringing said hinge axis (25) to intersect said point of intersection (K),
• hinging by stably coupling the sheet to said rotatable coupling members (29) of said clamp device,
• rotating the sheet about said hinge axis (25) by means of said sheet handling member, after the hinging step, until the predefined cutting line is made to coincide with the scoring path (22),
• scoring the sheet along the predefined cutting line by means of said scoring tool (20) after the rotating step, and
• severing the sheet along the scored cutting line after the scoring step.

8. Method according to claim 7, **characterised in that** the rotation of the sheet about said hinge axis (25) is carried out by stably connecting the sheet to said handling member.

9. Method according to claim 7, **characterised in that** the rotation of the sheet is carried out by arranging and maintaining said handling member abutting against a perimeter surface of said sheet orthogonal to said supporting surface (8).

10. Method according to any one of claims 7 to 9, **characterised by** decoupling said coupling members (29) from said sheet before scoring.

11. Method according to any one of claims 7 to 10, **characterised in that** the hinging of said sheet is implemented by moving two of said coupling members (29) towards each other along said hinge axis (25) towards an advanced clamping position of said sheet.

12. Method according to any one of claims 7 to 10, **characterised in that**, following severing, the sheet is rotated in the opposite sense to the previous one, until a further cutting line is made to coincide with said scoring path (22); during said rotation in the opposite sense the sheet being maintained stably connected to said clamp device and pulled or pushed by said handling member.

## Patentansprüche

1. Maschine zum Schneiden einer Glasscheibe entlang einer vordefinierten Schnittlinie, wobei die Maschine umfasst:
• eine Stützfläche (8) zum Tragen der Scheibe,
• mindestens ein motorisiertes Ritzwerkzeug (20), das entlang eines geradlinigen Ritzpfades (22) bewegbar ist,
• mindestens eine Klemmvorrichtung zum Greifen und Halten der Scheibe, wobei die Klemmvorrichtung Kupplungselemente (29) zum Kuppeln mit der Scheibe aufweist und die Kupplungselemente (29) um eine zur Stützfläche (8) orthogonale Scharnierachse (25) drehbar sind,
• mindestens ein Scheibenhandhabungselement und
• Betriebsmittel zum Bewegen des Scheibenhandhabungselements in entgegengesetzte Richtungen entlang einer geradlinigen Richtung (46) orthogonal zum Ritzpfad (22),
wobei die Kupplungselemente (29) und das Handhabungselement um die jeweiligen Scharnierachsen leerlaufen, und das Ritzwerkzeug (20) und die Kupplungselemente (29) entlang des Ritzpfades (22) gegenseitig ausgerichtet sind, und die Scharnierachse (25) den Ritzpfad (22) schneidet, wobei Aktorvorrichtungen zum Bewegen der Kupplungselemente (29) in entgegengesetzte Richtungen entlang des Ritzpfades (22) bereitgestellt sind,
wobei die Kupplungselemente (29) ein Paar Schubstangen umfassen, die entlang der Scharnierachse (25) koaxial sind, wobei Aktorvorrichtungen zum Bewegen der Schubstangen entlang der Scharnierachse (25) weg von und hin zu einer vorgerückten Position bereitgestellt sind,
**dadurch gekennzeichnet, dass** die Schubstangen entsprechende feste freie Endabschnitte (30) aufweisen, die einander entlang der Scharnierachse (25) gegenüberliegen und, in der vorgerückten Position, direkt auf der Scheibe aufliegen und die Scheibe zwischen sich klemmen, wobei mindestens einer der festen freien Endabschnitte (30) einen maximalen Außendurchmesser von zwanzig Millimetern haben.

2. Maschine nach Anspruch 1, **dadurch gekennzeichnet, dass** sie mindestens eine Ritzbrücke (13, 14) und einen motorisierten Schlitten (15, 16) umfasst, der entlang der Ritzbrücke (13, 14) in entgegengesetzte Richtungen entlang des Ritzpfades (22) bewegbar ist, wobei der Schlitten das Vorritzwerkzeug und die Klemmvorrichtung trägt.

3. Maschine nach Anspruch 2, **dadurch gekennzeichnet, dass** sie zwei der Ritzbrücken und zwei der Schlitten umfasst, die jeweils ein entsprechendes Ritzwerkzeug (20) und eine entsprechende Schubstange tragen.

4. Maschine nach einem der vorangegangenen Ansprüche, **dadurch gekennzeichnet, dass** das Scheibenhandhabungselement im Leerlauf um eine Scharnierachse orthogonal zur Stützfläche (8) drehbar ist und, im Gebrauch, die Scheibe schneidet.

5. Maschine nach einem der vorangegangenen Ansprüche, **dadurch gekennzeichnet, dass** das Scheibenhandhabungselement ein Saugelement oder einen Schubbolzen umfasst, der im Gebrauch über die Stützfläche (8) hinaus in Richtung der Scheibe vorsteht und angrenzend an eine Längsseite der Stützfläche (8) parallel zur geradlinigen Richtung (46) angeordnet ist.

6. Maschine nach einem der vorangegangenen Ansprüche, **dadurch gekennzeichnet, dass** sie Handhabungsmittel zum Bewegen des Handhabungselements entlang einer Richtung orthogonal zur Stützfläche (8) weg von und hin zu einer vorgerückten Zusammenarbeitsposition mit der Scheibe umfasst.

7. Verfahren zum Schneiden einer Glasscheibe entlang mindestens einer vordefinierten Schnittlinie unter Verwendung einer Schneidemaschine nach Anspruch 1, wobei das Verfahren die Schritte umfasst:
• Anordnen einer auf der Stützfläche (8) zu schneidenden Scheibe,
• Bewegen der Scheibe auf der Stützfläche (8),
• Bringen der vordefinierten Schnittlinie zum Überschneiden mit dem Ritzpfad (22) in mindestens einem Schnittpunkt (K),
• Bringen der Scharnierachse (25) zum Überschneiden mit dem Schnittpunkt (K),
• Scharnieren durch stabiles Koppeln der Scheibe mit den drehbaren Kopplungselementen (29) der Klemmvorrichtung,
• Rotieren der Scheibe um die Scharnierachse (25) mittels des Scheibenhandhabungselements, nach dem Scharnierschritt, bis die vordefinierte Schnittlinie mit dem Ritzpfad (22) zusammenfällt,
• Ritzen der Scheibe entlang der vordefinierten Schnittlinie mittels des Ritzwerkzeugs (20) nach dem Drehschritt, und
• Trennen der Scheibe entlang der geritzten Schnittlinie nach dem Ritzschritt.

8. Verfahren nach Anspruch 7, **dadurch gekennzeichnet, dass** die Drehung der Scheibe um die Scharnierachse (25) durch stabiles Verbinden der Scheibe mit dem Handhabungselement durchgeführt wird.

9. Verfahren nach Anspruch 7, **dadurch gekennzeichnet, dass** die Drehung der Scheibe durch Anordnen und Halten des Handhabungselements durchgeführt wird, das an einer Umfangsfläche der Scheibe senkrecht zur Stützfläche (8) anliegt.

10. Verfahren nach einem der Ansprüche 7 bis 9, **gekennzeichnet durch** das Entkoppeln der Kupplungselemente (29) von der Scheibe vor dem Ritzen.

11. Verfahren nach einem der Ansprüche 7 bis 10, **dadurch gekennzeichnet, dass** das Scharnieren der Scheibe durch Bewegen von zwei der Kupplungselemente (29) zueinander entlang der Scharnierachse (25) in Richtung einer vorgerückten Klemmposition der Scheibe durchgeführt wird.

12. Verfahren nach einem der Ansprüche 7 bis 10, **dadurch gekennzeichnet, dass** die Scheibe nach dem Trennen im entgegengesetzten Sinn zum vorhergehenden gedreht wird, bis eine weitere Schnittlinie mit dem Ritzpfad (22) zusammenfällt, wobei während der Drehung im entgegengesetzten Sinn die Scheibe stabil mit der Klemmvorrichtung verbunden gehalten und von dem Handhabungselement gezogen oder geschoben wird.

## Revendications

1. Machine pour couper une feuille de verre le long d'une ligne de coupe prédéfinie ; la machine comprenant :
- une surface de support (8), pour soutenir la feuille,
- au moins un outil de marquage motorisé (20) mobile le long d'un trajet de marquage rectiligne (22),
- au moins un dispositif de serrage pour saisir et retenir ladite feuille, le dispositif de serrage ayant des éléments de couplage (29) destinés à être couplés à ladite feuille, et les éléments de couplage (29) pouvant tourner autour d'un axe d'articulation (25) orthogonal à ladite surface de support (8),
- au moins un élément de manipulation de feuille et
- des moyens de fonctionnement pour déplacer ledit élément de manipulation de feuille dans des sens opposés le long d'une direction rectiligne (46) orthogonale audit trajet de marquage (22),
lesdits éléments de couplage (29) et ledit élément de manipulation étant inactifs autour des axes d'articulation respectifs, et ledit outil de marquage (20) et lesdits éléments de couplage (29) étant réciproquement alignés le long dudit trajet de marquage (22), et ledit axe d'articulation (25) coupant ledit trajet de marquage (22) ; des moyens d'actionnement étant prévus pour déplacer lesdits éléments de couplage (29) dans des sens opposés le long dudit trajet de marquage (22),
lesdits éléments de couplage (29) comprenant une paire de tiges de poussée qui sont coaxiales le long dudit axe d'articulation (25) ; des moyens d'actionnement (32) étant prévus pour déplacer lesdites tiges de poussée le long dudit axe d'articulation (25) loin de et vers une position avancée ; **caractérisée en ce que** lesdites tiges de poussée comportent des parties d'extrémité libres solides (30) respectives, qui se font face le long dudit axe d'articulation (25) et, dans la position avancée, reposent directement sur ladite feuille et serrent la feuille entre elles ; au moins une desdites parties d'extrémité libres solides (30) ayant un diamètre extérieur maximal de vingt millimètres.

2. Machine selon la revendication 1, **caractérisée en ce qu'**elle comprend au moins un pont de marquage (13, 14) et un chariot motorisé (15, 16) déplaçable le long dudit pont de marquage (13, 14) dans des sens opposés le long dudit trajet de marquage (22) ; ledit chariot (15, 16) portant ledit outil de marquage (20) et ledit dispositif de serrage.

3. Machine selon la revendication 2, **caractérisée en ce qu'**elle comprend deux desdits ponts de marquage et deux desdits chariots, chacun portant ledit un outil de marquage respectif (20) et ladite une tige de poussée respective.

4. Machine selon l'une quelconque des revendications précédentes, **caractérisée** en que en ce que ledit élément de manipulation de feuille est rotatif au ralenti autour d'un axe d'articulation, orthogonal à ladite surface de support (8) et, en cours d'utilisation, coupant ladite feuille.

5. Machine selon l'une quelconque des revendications précédentes, **caractérisée en ce que** ledit élément de manipulation de feuille comprend un élément d'aspiration ou une broche de poussée faisant saillie, en cours d'utilisation, au-delà de la surface de support (8) vers la feuille et agencé de manière adjacente à un côté longitudinal de ladite surface de support (8) parallèle à ladite direction rectiligne (46).

6. Machine selon l'une quelconque des revendications précédentes, **caractérisée en ce qu'**elle comprend des moyens de manipulation pour déplacer ledit élément de manipulation le long d'une direction orthogonale à ladite surface de support (8) loin de et vers une position avancée de coopération avec ladite feuille.

7. Procédé pour couper une feuille de verre le long d'au moins une ligne de coupe prédéfinie en utilisant une machine pour couper selon la revendication 1 ; le procédé comprenant les étapes consistant à :
- disposer une feuille à couper sur ladite surface de support (8),
- déplacer la feuille sur ladite surface de support (8),
- amener ladite ligne de coupe prédéfinie à croiser ledit trajet de marquage (22) en au moins un point d'intersection (K),
- amener ledit axe d'articulation (25) à croiser ledit point d'intersection (K),
- articuler en couplant de manière stable la feuille auxdits éléments de couplage rotatifs (29) dudit dispositif de serrage,
- faire pivoter la feuille autour dudit axe d'articulation (25) au moyen dudit élément de manipulation de feuille, après l'étape d'articulation, jusqu'à ce que la ligne de coupe prédéfinie soit amenée à coïncider avec le trajet de marquage (22),
- marquer la feuille le long de la ligne de coupe prédéfinie au moyen dudit outil de marquage (20) après l'étape de rotation, et
- rompre la feuille le long de la ligne de coupe marquée après l'étape de marquage.

8. Procédé selon la revendication 7, caractérisé en que la rotation de la feuille autour dudit axe d'articulation (25) est réalisée en reliant la feuille de manière stable audit élément de manipulation.

9. Procédé selon la revendication 7, caractérisé en que la rotation de la feuille est réalisée en agençant et en maintenant ledit élément de manipulation en butée contre une surface périmétrique de ladite feuille orthogonale sur ladite surface de support (8).

10. Procédé selon l'une quelconque des revendications 7 à 9, **caractérisé par** le découplage desdits éléments de couplage (29) de ladite feuille avant le marquage.

11. Procédé selon l'une quelconque des revendications 7 à 10, **caractérisé en ce que** l'articulation de ladite feuille est réalisée en déplaçant deux desdits éléments de couplage (29) l'un vers l'autre le long dudit axe d'articulation (25) vers une position de serrage avancée de ladite feuille.

12. Procédé selon l'une quelconque des revendications 7 à 10, **caractérisé en ce que**, à la suite de la rupture, on fait pivoter la feuille dans le sens opposé au précédent, jusqu'à ce qu'une autre ligne de coupe coïncide avec ledit trajet de marquage (22) ; pendant ladite rotation dans le sens opposé, la feuille est maintenue reliée de manière stable audit dispositif de serrage et tirée ou poussée par ledit élément de manipulation.
